# EUROPEAN PATENT APPLICATION

(11) **EP 4 614 376 A1**
(43) Date of publication of application: **10.09.2025**
(21) Application number: 25160529.1
(22) Date of filing: 27.02.2025
(51) Int. Cl.: G06F 21/62, G06F 3/01

(54) **METHOD AND SYSTEM FOR SELECTIVE OBJECT RENDERING IN METAVERSE**

(30) Priority: 06.03.2024 EP 24161878
(71) Applicant: Unify Beteiligungsverwaltung GmbH & Co. KG, 81739 München (DE)
(72) Inventor: Tsiatsikas, Zisis, 55534 Thessaloniki (GR); Sdrallis, Michail, 15238 Chalandri (GR)
(74) Representative: Schaafhausen, Anne

(57) **Abstract**

The invention relates to a method and system for selective object rendering in Metaverse, wherein the method comprises performing, by a first, a second and/or any further user in a Metaverse an action, analyzing, by a Metaverse server, the performed action by the first, the second or any further user to identify a private or sensitive object, rendering, by the Metaverse server the private or sensitive object and sending, by the Metaverse server the rendered private or sensitive object to the first, the second and/or any further user only in the case that the first, the second and/or any further user has access rights to view the rendered private or sensitive object.

## Description

The present invention relates to a method and a system for selective object rendering in Metaverse.

The Metaverse is a concept in which a digital space is created through the interaction of virtual, augmented and physical reality. The main aspect is to unite the different spaces of action on the Internet into one reality. The concept is often described with a strong focus on virtual sociality; a future iteration of the internet in the form of persistent, shared, virtual 3D spaces that are connected to form a perceived virtual universe. These are intended to enable individualization and everyday activities to a comparable extent to physical reality.

Although not widely famous or adopted by many companies, the future of virtual meetings is via augmented and virtual reality. That is, using metaverse technology. Metaverse, currently used by many gaming industries, is advancing fast and it requires the use of specific virtual reality headsets, in order for the Metaverse to be accessed.

One of the technological challenges of Metaverse, however, is 3D object rendering. The more detailed the metaverse world/scene, the more resources are required for rendering. On top of that, if an object is moving/changing in the metaverse world, it requires far more resources than when it is static. The more people (i.e. avatars in a virtual meeting room) the harder the rendering. For this specific reason, rendering is not happening by a single user device, but rather from server farms so that the work is split between different device/resources. At the end, the server farms render the objects and the scene and relay back the information to the clients in the form of streams.

Therefore, the present invention is based on the object to provide a method and a corresponding system for selective object rendering in the Metaverse. In particular, a method and a system which are capable of identifying objects to be rendered only for a certain type of user and reducing the rendering effort and resources of servers of the Metaverse to render 3D objects.

This object is solved by a method having the features according to claim 1, a system having the features of claim 9, a program product and a computer-readable medium comprising program code having the features of claim 15. Preferred embodiments of the invention are defined in the respective dependent claims.

According to the invention, a method for selective object rendering in Metaverse is provided, wherein the method comprises the steps of:
- performing an action, by a first, a second and/or any further user in a Metaverse;
- analyzing, by a Metaverse server, the performed action by the first, the second or any further user to identify a private or sensitive object;
- rendering, by the Metaverse server, the private or sensitive object, and
- sending, by the Metaverse server the rendered private or sensitive object to the first, the second and/or any further user only in the case that the first, the second and/or any further user have access rights to view the rendered private or sensitive object.

According to the invention, a private or sensitive object is any object which contains personal or sensitive details. This can be, for example, credit card data, bank data, other payment data (e.g. PayPal etc.), medical data or other personal data. In particular, it is data or information that is not usually shared with the general public. Moreover, the term private/sensitive data refers to pieces of information which could be used to uniquely track a data subject in a group of people.

According to a preferred embodiment, the step of analyzing the performed action of the first, the second or any further user is performed by a device of the first, the second or any further user locally, and rendering by the device of the first, the second or any further user the private or sensitive object locally if it does not exist on the Metaverse or retrieving by the device of the first, the second or any further user the private or sensitive object from a data structure, a map or a database of the Metaverse.

According to a preferred embodiment, the step of analyzing the performed action of the first, the second or any further user is triggered by detecting a voice information or conversation or by detecting a sound level below or above a predefined threshold, by tracking the movements of the head and eyes of the first, the second and/or any further user, by tracking of pupil center corneal reflection, PCCR, of the first, the second and/or any further user, by body moving of the first, the second and/or any further user to each other, by the spatial proximity of the first, the second and/or any further user to each other, by the affiliation of the first, the second and/or any further user to a common group of users, or upon detection of any gesture of the first, the second and/or any further user which indicates that the performed action is private or sensitive.

In the sense of the invention, detecting a sound level below or above a predefined threshold indicates that users talk in a certain way. For example, if the users whisper, this is interpreted as meaning that the users either do not want to disturb others or are exchanging a secret with each other or are talking about matters that should not be shared with the other users, for example in a meeting or an online lecture. For example, whispering can have a decibel value of around 30 db, while a normal conversation can be measured at around 60 db.

In the sense of the invention, affiliation to a common group of users means that the users belong to a certain collective group.

This can be, for example, a user group with predefined rights or simply the division of users into two groups, with some belonging to the first group and others to the second group, for example to do something in teamwork.

In the sense of the invention, detecting voice information means that context of a conversation is detected by means of natural language processing and is then further analyzed. Furthermore, according to the invention, the rendering of context-specific objects of this identified voice information can take place at almost the same time e.g. on the fly. By rendering the voice information, on the fly, means that either an object that does not exist in the Metaverse needs to be generated or if it has been already rendered it needs to be retrieved from a data structure like a map, or a database of the Metaverse. There may exist different types of objects that have already been rendered for each participant based on their preferences. Additionally, even if the objects already exist in the map or database, but there is a need for privacy and/or anonymization, this means that the objects will need to be processed accordingly to fulfill those requirements. Moreover, the spoken content (audio stream) will need to be conveyed intact for the recipients of the private/anonymized information and altered to the rest. Associations of the existing objects and prediction is performed in order to execute the privacy/anonymization of the existing objects for a certain scene, while they are maintained in the data structure, before they are used to improve the response. The aim here is to process the objects before they are used and build the virtual object scene faster and/or improve response time. In every case, the combination of audio stream alteration and/or object selection/(re)-rendering which results in less resource consumption is selected. If the altered audio stream can describe an object that already exists in the data structure, then the object is simple retrieved. If this is not possible to describe effectively the scene, the alteration to the audio stream will always follow the most resource-friendly path, with regards to the objects that need to be presented in order to preserve the privacy/anonymization.

That is, if for example there is a need to render a credit card object by User A for User B, but this needs to be done in a private-related way, because for example User C is in a close distance, say x meters (e.g. 1-3 meters), User A device will search in the data structure for similar objects, like for example a club/subscription card, so the actual information will remain hidden from User C. At the same time, if User D seems to come close to User A, B, C, in x seconds (e.g. 1 - 20 seconds), User A device will predict which objects need to be rendered to preserve the privacy/anonymity of the scene. If they already exist in the data structure they will be prioritized, or in a different way they have similarity they will be used as a basis to create new objects / replicas with altered information (e.g., the card number, CVC code etc).

According to another preferred embodiment, the step of analyzing the performed action of the first, the second and/or any further user further comprises using a machine learning, ML, module and/or an artificial intelligence, Al, module.

According to still another preferred embodiment, before the step of sending the rendered private or sensitive object, the method further comprises separately setting, by the first, the second and/or any further user the access rights to view the rendered private or sensitive object.

Further, according to a preferred embodiment, the step of analyzing the performed action of the first user further comprises identifying, by the metaverse server or the device of the first, the second or any further user, a private conversation between the first user, the second user and/or any further user the method further comprises:
- rendering, by the device of the first, the second and/or any further user, the private or sensitive object locally;
- sending, by the device of the first, the second and/or any further user, the rendered private or sensitive object to the Metaverse server and/or the device of the first, the second or any further user only that are part of the private conversation.

In the sense of the invention, a private conversation or activity can be one where at least one party would not reasonably want or expect to be overheard or observed by anyone aside from those present. Indicators of such a private conversation can for example be whispering between people or putting heads together. However, it is also possible for a private conversation to take place between two or more people and for others to overhear, but for details to be exchanged that are only relevant between the participants in the private conversation. The latter usually disturbs others so that whispering often takes place here too.

According to yet another preferred embodiment, if the private or sensitive object has been partly or fully changed, the method further comprises re-rendering, by the Metaverse server or locally by the device of the first, the second or any further user the complete or selective parts of the private or sensitive object.

According to another embodiment, the step of analyzing the performed action of the first, the second or any further user comprises associating and/or predicting, by the Metaverse server or by the device of the first, the second or any further user of private or sensitive objects in a predetermined time period after the first, the second and/or any further user performed an action. Wherein the predetermined time period is under 30 seconds, preferred under 10 seconds and most preferred under 5 seconds, wherein 0.1 - 5 second or 1 - 3 seconds been optimal. As in the previous example, a prediction can be made during the analysis of an action by one or more users as to whether a private or sensitive object is about to be shown. The required objects can then be rendered or provided from an existing data set within a predefined period of time. This allows the privacy/anonymization process to take place proactively to enhance the response time in the creation of the virtual scene. This allows a smoother and more fluid virtual scene to be created in the metaverse, creating a more realistic experience for the user.

According to yet another preferred embodiment the method further comprises:
- generating, by the Metaverse server and/or the device of the first, of the second or of any further user one or more replicated objects;
- disseminating, by the Metaverse server and/or the device of the first, of the second or of any further user the one or more replicated object to users having no access rights to view the rendered private or sensitive object; and/or
- anonymizing, by the Metaverse server and/or the device of the first, of the second or of any further user the first, the second and/or any further user having access rights to view the rendered private or sensitive object.

According to yet another preferred embodiment, the method further comprises altering, by the Metaverse server and/or the device of the first, of the second or of any further user the audio stream of the first, the second or any further user having access rights to view the rendered private or sensitive object and/or altering the audio stream of users having no access rights to view the rendered private or sensitive object. Further, this could mean that the spoken content (audio stream) will need to be conveyed intact for the recipients (users) of the private/anonymized information or object but altered to the rest of the users. Whereby, in the sense of the invention altering the audio stream can also mean that a common single audio stream is split into two new ones, one for the users who also have access to the private or sensitive object and want to exchange information about it and one for the users who do not have access to it and should not be aware of it.

According to yet another preferred embodiment, the step of analyzing the performed action of the first user further comprises deep learning and /or image similarity methods. The analysis of a performed action may for example be achieved with object detection techniques. Object detection techniques are computer vision techniques in which a software system can detect, locate, and trace the object aka an action from a given image or video. The special attribute about object detection is that it identifies the class of object (person, table, chair, etc.) and their location-specific coordinates in the given image.

The location can be pointed out by drawing a bounding box around the object. The bounding box may or may not accurately locate the position of the object. The ability to locate the object inside an image defines the performance of the algorithm used for detection. Face detection is one of the examples of object detection. Such object detection algorithms might be pre-trained or can be trained from scratch. In most use cases, pre-trained weights from pre-trained models are used and then fine-tuned as per the requirements and different use cases. For these aforementioned purposes program libraries like Tensorflow (https://github.com/tensorflow) and Keras can be used. These open-source libraries for numerical computation and large-scale machine learning ease the process of acquiring data, training models, serving predictions, and refining future results. Thereby, for example, Tensorflow bundles together Machine Learning and Deep Learning models and algorithms.

According to the invention, a system is provided, wherein the system is configured to perform the steps of the method for selective object rendering in Metaverse.

According to a preferred embodiment, the system comprises a Metaverse server and a first, a second and/or any further user device. In the sense of the invention, a first, a second and/or any further user device is also referred to as a device of the first, the second or any further user.

In the sense of the invention, a user device is primarily a device with which the user normally acts, communicates, etc. in the metaverse. For example, this can be virtual reality VR glasses or a VR headset. Such devices may also comprise other accessories such as special gloves, helmets, or suits. These devices also comprise ordinary smartphones, mobile computers, PCs, servers, and the like. In addition, such devices comprise microphones, loudspeakers, cameras, and other sensors such as haptic sensors or tactile sensors.

According to another preferred embodiment, the system further comprises a machine learning, ML, module and/or an artificial intelligence, Al, module analyze the performed action. According to still another preferred embodiment, the machine learning, ML, module, the artificial intelligence, Al, module is an internal component of the metaverse server, an external component, a cloud module, a software as a service, SaaS.

Further, according to a preferred embodiment, the system further comprises a rendering server or an application to render the private or sensitive object.

According to yet another preferred embodiment, the rendering server or application is part of the Metaverse server or is part of the first, the second and/or any further user device or is a Software as a Service, SaaS, or a cloud server.

According to yet another aspect of the present invention, a program element is provided, which when being executed by a processor, is adapted to carry out steps of the method for selective object rendering in Metaverse according to any one of the previous embodiments.

According to another aspect of the present invention, a computer-readable medium comprising program code is provided, which when being executed by a processor, is adapted to carry out steps of the method for selective object rendering in Metaverse according to any one of the previous embodiments.

A computer-readable medium may be a floppy disk, a hard disk, an USB (Universal Serial Bus) storage device, a RAM (Random Access Memory), a ROM (read only memory) or an EPROM (Erasable Programmable Read Only Memory). A computer readable medium may also be a data communication network, e. g. the Internet, which may allow downloading a program code.

It has also to be noted that aspects of the invention have been described with reference to different subject-matter. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular, combinations between features relating to the apparatus type claims and features relating to the method type claims are considered to be disclosed. In addition, features relating to one of the embodiments may be combined with other features of another embodiment, the drawings or the claims, where possible. The invention and embodiments thereof will be described below in further detail in example scenarios and in connection with the drawing.

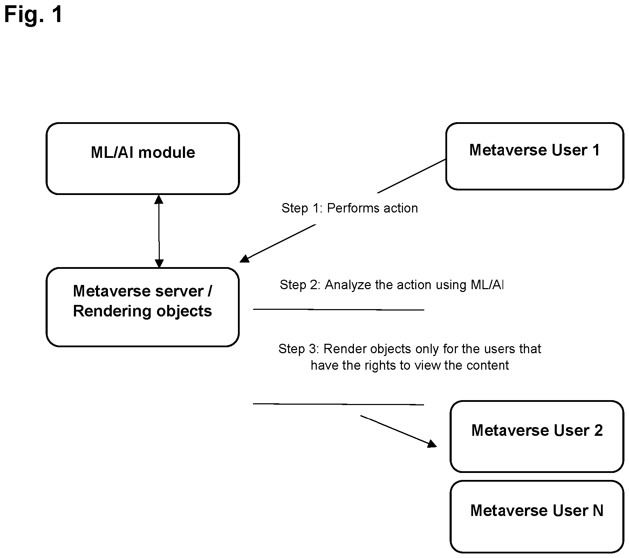

- Fig. 1: shows in a schematic illustration an abstract overview of the proposed method according to an embodiment of the invention.
Although example scenarios are given individually below, it is however possible and preferred to combine these example scenarios or partial aspects thereof with one another in accordance with the invention.

### Example scenario 1 - Whispering and access control in the Metaverse

In this scenario, the rendering is performed in the server farms. This first use case mimics a virtual meeting room, perhaps a university lecture room with many users participating in the virtual lecture, reflected in the metaverse world. At some point within the class, Alice who is located next to Bob, is whispering in her ear about the fact of buying the book that the teacher has just mentioned. The system identifies the whispering activity by taking into consideration the low volume the sentence was spoken from Alice to Bob, the short distance between the two students and also, the body position of the student who has started the whispered sentence (the fact that student #1 leaned towards student #2). At the same time, Bob, who also wants the book, asks Alice to also buy a copy for her and presents her credit card for Alice to make the payment for the second book.

At this scenario the method will act as follows:
1. When a whispered activity is identified, the server will render the voice information. As it is a whisper between two parties, access rights to the whisper will only be given to Alice and Bob. The rest of the students will not hear this rendered information (i.e., the information will not be sent from the rendering server to their virtual reality headsets). This sub-scenario has a special meaning when the spoken information is reflected on an object that needs to be rendered, even if this is not present at the metaverse world at the specific moment. For example, a user discusses about the meteorological information's (e.g. meteo metrics) in the current region, and an object is rendered on the metaverse server in order to get broadcasted to the rest of the devices (i.e., create a graphic rendered object with the meteorological information's). In this case at hand, the selective rendering will be done taking into account the actual whisper, i.e., the sound level and the recipients of the sound, i.e., the participants in the same room. The sound level, i.e., whisper, will also reflect the access rights to the specific information being communicated.
2. When the credit card is taken out of the wallet by Alice, the server that is rendering the virtual reality objects will understand that this is classified data (sensitive data) for example by using an object detection technique like Tensorflow (https://github.com/tensorflow) or else and will only show (i.e., selective rendering) this object to the person, recipient that is intended to. The remaining of the class will not be allowed access to that object. The technology behind confidential data identification can be done with the use of deep learning and the widely used image similarity methods.

It has to be mentioned that although in the above example, access rights were given to whispered information and a credit card, the use case can be extended to any other scenario where sensitive information is exchanged. For example, when paying at the grocery store, accessing a room, a meeting, etc. In addition, it could be seen, that the accessed data is propagated from the servers to two parties only.

However, the methodology can be extended to include a group or even groups of people. Considering the same use case, an example would be, when the class is split into groups to do an exercise and then each group presents the results to the rest of the class. During the group-work time, information of group A will only be shared among its members. The same goes for group B, C, etc.

Fig. 1 offers an abstract overview of the proposed method. The main idea capitalizes on the selective rendering of 3D objects on a metaverse server, by sending accordingly the relevant streams to the respective users. The proposed functionality can analyze and classify if an object is private/sensitive, and/or if a sound is whispered in the metaverse. This case can be used as a trigger, to selectively render 3D objects that will be sent to specific users/recipients, always with the perspective of controlling the access of certain content.

### Example scenario 2: Metaverse resource optimization

In this scenario, the rendering is performed in the user devices. For this scenario, it is assumed that a few people are present in a meeting room. Two participants, Alice and Bob, are sitting with some distance to each other. Maybe there are a few other participants in between them or they may be sitting opposite one another. At some point Alice was not able to finish copying the diagram the presenter was presenting. She is, hence, asking for Bob to show her the diagram from his notes so that she can copy. This communication is done by Alice's lifting of her head and looking towards Bob, as well as whispering to him. The system tracks her head and eye movements (e.g. through pupil center corneal reflection PCCR) to identify that she is referring to Bob. As a result, Bob is showing her the notes by lifting them from his desk. At that time, the rendering server understands that there is a private conversation between parties, and it gives a signal to the users' headsets (i.e. Alice's and Bob') to do the rendering of the object locally rather than for the activity to take place in the rendering server, thus saving rendering resources. This, in turn, means that the notes that are shared from Bob and Alice are only accessible by these two people and not the rest of the meeting participants.

In this scenario, the focus is not on the access control aspect, but on optimizing the rendering process in the user devices. This can be achieved if the devices know which objects are necessary to be rendered locally.

Thus, by avoiding the local rendering of redundant objects, resources on the user devices are saved. This can be achieved, for example if the server which coordinates the information between the clients, selectively communicates which objects are necessary or not.

### Example scenario 3: Re-rendering selectively parts of existing objects

When rendering the voice information on the fly, this means that either it will be necessery to generate an object that does not exist in the metaverse or if it has been already rendered, it would be necessery to retrieve it from a data structure like a map, or a database.

In this regards, a combination of the whispering effect along with a local rendering on the device means that there is a technical aim on executing the task locally and not on the server. Local rendering is usually performed in an efficient way due to resource limitations, thus the rendered objects need to be as simple as possible but at the same time they must reflect the whispered information.

If two users have already interactions in the past about the rendered objects, the whisperer will retrieve the existing objects. But if the object has changed, the local device will render only the object's differences and not the complete object, to save resources. For example:
- User A, the whisperer, says "This is my credit card".
- User B, the receiver, says "I have your information".
- User A, the whisperer, says "I have a new one with number ... 567843 ...".

User device A will retrieve the object that was rendered from a previous interaction, and it will re-render in the object only the numbers that have changed.

Further, when the rendering is performed on the client (user device), with limited resource capabilities, the synthesis of new objects based on a combination of previous objects is also possible, even from parts of previous objects with certain priority based on the discussed context. If the device resources are not sufficient, local rendering will be performed only on the bits of information which are necessary to reflect the whispered information.

Local rendering means that based on access rights and local private settings of the device of a participant, each time the same information is whispered by multiple different persons at the same time (i.e, User A says, look my credit card), the information could be rendered in a different way (i.e., User B and User C can view different numbers from two separate credit cards (say Card 1, Card 2), based on the access level rights). In this case, two objects need to be rendered in the local device, based on the access rights. That is, User B and User C would receive a different version of the rendered object, privacy-wise, Card 1 and Card 2, respectively. The whispered content can be as general as User A wants, but the rendered objects can differ based on the settings.

Regarding this aforementioned point, it would be even possible to deliver not just different rendered objects, but different versions of the whispered content that match the rendered objects. In the previous example presented above, based on access rights, User B would receive Card 1 and User C Card 2, and the whispered stream will be altered automatically only with regards to the card details, say the number, expiration date and so on. User A would not need to whisper both credit card numbers to participants User B and User C.

Furthermore, if the users want to hide their actions in the virtual world, additional objects will need to replace their actions to achieve a degree of anonymization and protect the privacy of the users concerned. This could be done by generating replicated objects which combined will be disseminated to the rest of the participants in order to preserve the privacy of the users that exchange private information if this is requested. For example, instead of giving the credit card, User A could give a club/subscription card to User B. So the rest of the users believe that this was the conveyed object and the related information. And further, it is also possible to anonymize the users in the scene in order to exchange private information.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

## Claims

1. A method for selective object rendering in Metaverse, wherein the method comprises the steps of:
- performing an action, by a first, a second and/or any further user in a Metaverse;
- analyzing, by a Metaverse server, the performed action by the first, the second or any further user to identify a private or sensitive object;
- rendering, by the Metaverse server, the private or sensitive object; and
- sending, by the Metaverse server, the rendered private or sensitive object to the first, the second and/or any further user only in the case that the first, the second and/or any further user has access rights to view the rendered private or sensitive object.

2. The method according to claim 1, wherein the step of analyzing the performed action of the first, the second or any further user is performed by a device of the first, the second or any further user locally, and rendering by the device of the first, the second or any further user the private or sensitive object locally if it does not exist on the Metaverse or retrieving by the device of the first, the second or any further user the private or sensitive object from a data structure, a map or a database of the Metaverse.

3. The method according to claim 1, wherein the step of analyzing the performed action of the first, the second or any further user is triggered by detecting a voice information or conversation or by detecting a sound level below or above a predefined threshold, by tracking the movements of the head and eyes of the first, the second and/or any further user, by tracking of pupil center corneal reflection, PCCR, of the first, the second and/or any further user, by body moving of the first, the second and/or any further user to each other, by the spatial proximity of the first, the second and/or any further user to each other, by the affiliation of the first, the second and/or any further user to a common group of users, or upon detection of any gesture of the first, the second and/or any further user which indicates that the performed action is private or sensitive.

4. The method according to any one of the preceding claims, wherein the step of analyzing the performed action of the first, the second and/or any further user further comprises using a machine learning, ML, module and/or an artificial intelligence, Al, module.

5. The method according to any one of the preceding claims, wherein before the step of sending the rendered private or sensitive object, the method further comprises separately setting, by the first, the second and/or any further user, the access rights to view the rendered private or sensitive object.

6. The method according to any one of the preceding claims, wherein the step of analyzing the performed action of the first user further comprises identifying, by the metaverse server or the device of the first, the second or any further user, a private conversation between the first user, the second user and/or any further user, wherein the method further comprises:
- rendering, by the device of the first, the second or any further user, the private or sensitive object locally;
- sending, by the device of the first, the second and/or any further user, the rendered private or sensitive object to the Metaverse server and/or the device of the first, the second or any further user only that are part of the private conversation.

7. The method according to any one of the preceding claims, wherein if the private or sensitive object has been partly or fully changed, the method further comprises re-rendering, by the Metaverse server or locally by the device of the first, the second or any further user the complete or selective parts of the private or sensitive object.

8. The method according to any one of the preceding claims, wherein the step of analyzing the performed action of the first, the second or any further user comprises associating and/or predicting, by the Metaverse server or by the device of the first, the second or any further user of private or sensitive objects in a predetermined time period after the first, the second and/or any further user performed an action.

9. The method according to any one of the preceding claims, wherein the method further comprises:
- generating, by the Metaverse server and/or the device of the first, of the second or of any further user one or more replicated objects;
- disseminating, by the Metaverse server and/or the device of the first, of the second or of any further user, the one or more replicated object to users having no access rights to view the rendered private or sensitive object; and/or
- anonymizing, by the Metaverse server and/or the device of the first, of the second or of any further user the first, the second and/or any further user having access rights to view the rendered private or sensitive object.

10. The method according to any one of the preceding claims, wherein the method further comprises altering, by the Metaverse server and/or the device of the first, of the second or of any further user the audio stream of the first, the second or any further user having access rights to view the rendered private or sensitive object and/or altering the audio stream of users having no access rights to view the rendered private or sensitive object.

11. The method according to any one of the preceding claims, wherein the step of analyzing the performed action of the first, the second or any further user further comprises deep learning and/or image similarity methodologies.

12. A system for selective object rendering in Metaverse, wherein the system is configured to perform the steps of the method according to any of the claims 1 to 11.

13. The system according to claim 12, wherein the system comprises:
- a Metaverse server; and
- a first, a second and/or any further user device.

14. The system according to any one of the claims 12 to 13, wherein the system further comprises a machine learning, ML, module and/or an artificial intelligence, Al, module to analyze the performed action and/or wherein the machine learning, ML, module, the artificial intelligence, Al, module is an internal component of the metaverse server, an external component, a cloud module, a software as a service, SAAS.

15. The system according to any one of the claims 12 to 14, wherein the system further comprises a rendering server or application to render the private or sensitive object and/or wherein the rendering server or application is part of the Metaverse server or is part of the first, the second and/or any further user device or is a Software as a Service, SaaS, or a cloud server.

16. A program element which when being executed by a processor, is adapted to carry out steps of the method for selective object rendering in Metaverse according to any one of the claims 1 to 11 and/or a computer-readable medium comprising program code, which when being executed by a processor, is adapted to carry out steps of the method for selective object rendering in Metaverse according to any one of the claims 1 to 11.
